# EUROPÄISCHE PATENTSCHRIFT

(11) **EP 2 506 708 B1**
(45) Veröffentlichungstag und Bekanntmachung des Hinweises auf die Patenterteilung: **20.08.2014**
(21) Anmeldenummer: 10781908.8
(22) Anmeldetag: 25.11.2010
(51) Int. Cl.: A01N 25/28, A01N 43/56

(54) **PESTIZID-HALTIGE MIKROKAPSELN MIT POLYVINYLMONOMEREN ALS VERNETZER**
PESTICIDE-CONTAINING MICROCAPSULES WITH POLYVINYLMONOMERS AS CROSS-LINKING AGENT
MICROCAPSULES CONTENANTS UN PESTICIDE COMPRENANTS DES MONOMÈRES POLYVINYLE COMME AGENTS RÉTICULANTS

(30) Priorität: 30.11.2009 EP 09177493
(43) Veröffentlichungstag der Anmeldung: 10.10.2012
(73) Patentinhaber: BASF SE, 67056 Ludwigshafen (DE)
(72) Erfinder: JUNG, Marc, Rudolf, 67551 Worms (DE); KOPLIN, Tobias, Joachim, 67063 Ludwigshafen (DE); KRAPP, Michael, 67122 Altrip (DE); KOLB, Klaus, 67105 Schifferstadt (DE)
(86) Internationale Anmeldenummer: PCT/EP2010/068245
(87) Internationale Veröffentlichungsnummer: WO 2011/064312

(56) Entgegenhaltungen:
- WO-A1-2009/098232
- WO-A2-2008/071649

## Beschreibung

Die vorliegende Erfindung betrifft Mikrokapseln umfassend einen Pestizid-haltigen Kapselkern und eine Kapselwand, sowie ein Verfahren zur Herstellung von dieser Mikrokapseln. Weiterhin betrifft die Erfindung eine agrochemische Formulierung umfassend die Mikrokapseln, sowie die Verwendung der Mikrokapseln zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen. Kombinationen bevorzugter Merkmale mit anderen bevorzugten Merkmalen werden von der vorliegenden Erfindung umfasst.

Agrochemische Wirkstoffe können mit verschiedensten Methoden verkapselt werden. So können die Kapselhüllen beispielsweise auf Polyurethan, Acylhamstoff oder Polyacrylaten basieren.

Mikrokapseln umfassend einen Kapselkern und eine Kapselwand, die auf Polyacrylaten basiert, sind allgemein bekannt:
WO 2008/071649 offenbart Mikrokapseln umfassend einen Kapselkern und eine Kapselwand, wobei die Kapselwand aufgebaut ist aus 30-90 Gew. % Alkylester der (Meth)Acrylsäure und/oder (Meth)Acrylsäure und 10-70 Gew.% einer Mischung aus Divinyl- und Polyvinylmonomeren.
WO 2011/004006 offenbart Mikrokapseln umfassend einen Kapselkern und eine Kapselwand, wobei die Kapselwand aufgebaut ist aus 50-90 Gew.% Alkylester der (Meth)Acrylsäure und 10-50 Gew.% einer Mischung aus Divinyl- und Polyvinylmonomeren.
WO 2009/098232 offenbart Mikrokapseln umfassend einen Kapselkern und eine Kapselwand, wobei die Kapselwand aufgebaut ist aus 30-70 Gew.% Alkylester der (Meth)Acrylsäure und 0-20 Gew.% einer oder mehrerer bi- und/oder polyfunktioneller Monomeren, welche in Wasser nicht löslich oder schwer löslich sind.

Die bekannten Mikrokapseln aus Polyurethan oder Polyacrylaten weisen verschiedene Nachteile auf, wie eine sehr schnelle Freisetzung des Kapselkerns.

Aufgabe der vorliegenden Erfindung war es daher Pestizid-haltige Mikrokapseln zu finden, die eine langsame und gleichmäßige Freisetzung des Pestizides erlaubten.

Die Aufgabe wurde gelöst durch Mikrokapseln umfassend einen Pestizid-haltigen Kapselkem und eine Kapselwand, wobei die Kapselwand aufgebaut ist aus

| | |
|---|---|
| 30 bis 90 Gew.-% | einem oder mehrerer C₁-C₂₄-Alkylester der Acryl- und/oder Methacrylsäure, Acrylsäure, Methacrylsäure und/oder Maleinsäure (Monomere I), |
| 10 bis 70 Gew.-% | einem oder mehrerer Polyvinylmonomere (Monomer II), und |
| 0 bis 30 Gew.-% | einem oder mehrerer weiterer Monomere (Monomer III), die von den Monomeren I verschieden sind, |

jeweils bezogen auf das Gesamtgewicht der Monomere.

Die mittlere Teilchengröße der Kapseln (Z-Mittel mittels Lichtstreuung) beträgt 1 bis 50 µm. Gemäß einer bevorzugten Ausführungsform beträgt die mittlere Teilchengröße der Kapseln 1,5 bis 15 µm, bevorzugt 4 bis 10 µm. Dabei haben bevorzugt 90% der Teilchen eine Teilchengröße von weniger als der doppelten mittleren Teilchengröße.

Das Gewichtsverhältnis von Kapselkern zu Kapselwand liegt meist im Bereich von 50 : 1 bis 1 : 1, bevorzugt von 20 : 1 bis 2 : 1, und insbesondere von 20 : 1 bis 4 : 1.

Die Polymere der Kapselwand enthalten im Allgemeinen mindestens 30 Gew.-%, in bevorzugter Form mindestens 35 Gew.-% und in besonders bevorzugter Form mindestens 40 Gew.-%, sowie im Allgemeinen höchstens 90 Gew.-%, vorzugsweise höchstens 80 Gew.-% und in besonders bevorzugter Form höchstens 75 Gew.-% C₁-C₂₄-Alkylester der Acryl- und/oder Methacrylsäure, Acrylsäure, Methacrylsäure und/oder Maleinsäure (Monomere I) einpolymerisiert, bezogen auf das Gesamtgewicht der Monomere.

Erfindungsgemäß enthalten die Polymere der Kapselwand im Allgemeinen mindestens 10 Gew.-%, bevorzugt mindestens 15 Gew.-%, vorzugsweise mindestens 20 Gew.-% sowie im Allgemeinen höchstens 70 Gew.-%, vorzugsweise höchstens 60 Gew.-% und in besonders bevorzugter Form höchstens 50 Gew.-% Polyvinylmonomere (Monomere II) einpolymerisiert, bezogen auf das Gesamtgewicht der Monomere.

Daneben können die Polymere bis zu 30 Gew.-%, bevorzugt bis zu 20 Gew.-%, insbesondere bis zu 10 Gew.-%, besonders bevorzugt bis zu 5 Gew.-% sowie mindestens 1 Gew.-%, weiterer Monomere III, bevorzugt Monomere IIIa, einpolymerisiert enthalten, bezogen auf das Gesamtgewicht der Monomere.

Vorzugsweise ist die Kapselwand nur aus Monomeren der Gruppen I und II aufgebaut.

Als Monomere I eignen sich C₁-C₂₄-Alkylester der Acryl- und/oder Methacrylsäure (Monomere Ia). Weiterhin eignen sich die ungesättigten C₃- und C₄-Carbonsäuren wie Acrylsäure, Methacrylsäure, oder Maleinsäure (Monomere Ib). Besonders bevorzugte Monomere I sind Methyl-, Ethyl-, n-Propyl- und n-Butylacrylat und/oder die entsprechenden Methacrylate. Bevorzugt sind iso-Propyl-, iso-Butyl-, sec.-Butyl- und tert.-Butylacrylat und die entsprechenden Methacrylate. Generell werden die Methacrylate und Methacrylsäure bevorzugt.

Monomer I umfasst bevorzugt sowohl Monomere la als auch Monomere Ib. Besonders bevorzugt sind Mischungen von Monomer la (wie Methylmethacrylat oder C₁-C₂₄ Alkylester der Acrylsäure) mit Methacrylsäure oder Acrylsäure. Das Gewichtsverhältnis von Monomer Ia zu Monomer Ib liegt meist im Bereich von 10:1 bis 1:10, bevorzugt von 6 : 1 bis 1 : 8, insbesondere von 2:1 bis 1 : 3.

Nach einer bevorzugten Ausführungsform enthalten die Mikrokapselwände 15 Gew.-% bis 70 Gew.-%, bevorzugt 20 bis 50 Gew.%, Maleinsäure und/oder Acrylsäure insbesondere Methacrylsäure.

Geeignete Polyvinylmonomere sind die Polyester von Polyolen mit Acrylsäure und/oder Methacrylsäure, ferner die Polyallyl- und Polyvinylether dieser Polyole. Bevorzugt werden Trimethylolpropantriacrylat und -methacrylat, Pentaerythrittriallylether, Pentaerythrittetraallylether, Pentaerythrittriacrylat und Pentaerythrittetraacrylat sowie ihre technischen Mischungen.

Als weitere Monomere III kommen Monomere in Betracht, die von den Monomeren I und II verschieden sind. Beispiele sind Vinylacetat, Vinylpropionat, Vinylpyridin und Styrol oder α-Methylstyrol. Besonders bevorzugt werden Ladung tragende oder ionisierbare Gruppen tragende Monomere IIIa, die von den Monomeren I und II verschieden sind, wie Itaconsäure, Maleinsäureanhydrid, 2-Hydroxyethylacrylat und - methacrylat, Acrylamido-2-methylpropansulfonsäure, Methacrylnitril, Acrylnitril, Methacrylamid, N-Vinylpyrrolidon, N-Methylolacrylamid, N-Methylolmethacrylamid, Dimethylaminoethylmethacrylat und Diethylaminoethylmethacrylat.

Monomere III umfassen bevorzugt genau eine ethylenisch ungesättigte Gruppe (wie Vinyl- oder Acrylgruppen). Monomere III sind bevorzugt frei von Di- oder Polyvinylmonomeren, besonders bevorzugt enthalten sie höchsten 5,0 Gew%, insbesonder höchstens 1,0 Gew.% und speziell höchstens 0,1 Gew.% Divinylmonomere.

Bevorzugt ist die Kapselwand aufgebaut aus

| | |
|---|---|
| 30 bis 90 Gew.-% | einer Mischung aus Monomeren Ia und Ib, wobei der Anteil der Monomeren Ib 15 bis 70 Gew.-% bezogen auf das Gesamtgewicht aller Monomere I, II and III ist, |
| 10 bis 70 Gew.-% | Monomer II, und |
| 0 bis 30 Gew.-% | weitere Monomere III, |

jeweils bezogen auf das Gesamtgewicht der Monomere.

Die erfindungsgemäßen Mikrokapseln lassen sich durch eine sogenannte in-situ-Polymerisation herstellen. Das Prinzip der Mikrokapselbildung basiert darauf, dass man aus den Monomeren, einem Radikalstarter, einem Schutzkolloid und dem einzukapselnden Pestizid eine stabile Öl-in-Wasser-Emulsion herstellt. Bevorzugt ist in der Emulsion das Pestizid in dem unpolaren Lösungsmittel gelöst. Anschließend löst man die Polymerisation der Monomeren durch Erwärmung aus und steuert sie gegebenenfalls durch weitere Temperaturerhöhung, wobei die entstehenden Polymere die Kapselwand bilden, welche das Pestizid umschließt. Dieses allgemeine Prinzip wird beispielsweise in der DE-A-10 139171 beschrieben.

Die vorliegende Erfindung betrifft daher auch ein Verfahren zur Herstellung der erfindungsgemäßen Mikrokapseln, indem man aus Monomeren, Radikalstarter, Schutzkolloid und dem einzukapselnden Pestizid eine Öl-in-Wasser-Emulsion herstellt, und die Polymerisation der Monomeren durch Erwärmung auslöst und gegebenenfalls durch weitere Temperaturerhöhung steuert.

In der Regel werden die Mikrokapseln in Gegenwart wenigstens eines organischen oder anorganischen Schutzkolloids hergestellt. Sowohl organische wie auch anorganische Schutzkolloide können ionisch oder neutral sein kann. Schutzkolloide können dabei sowohl einzeln wie auch in Mischungen mehrerer gleich oder unterschiedlich geladener Schutzkolloide eingesetzt werden.

Organische Schutzkolloide sind bevorzugt wasserlösliche Polymere, die die Oberflächenspannung des Wassers von 73 mN/m maximal auf 45 bis 70 mN/m senken und somit die Ausbildung geschlossener Kapselwände gewährleisten sowie Mikrokapseln mit bevorzugten Teilchengrößen im Bereich von 0,5 bis 50 µm, vorzugsweise 0,5 bis 30 µm insbesondere 0,5 bis 10 µm, ausbilden.

Organische neutrale Schutzkolloide sind beispielsweise Cellulosederivate wie Hydroxyethylcellulose, Methylhydroxyethylcellulose, Methylcellulose und Carboxymethylcellulose, Polyvinylpyrrolidon, Copolymere des Vinylpyrrolidons, Gelatine, Gummiarabicum, Xanthan, Kasein, Polyethylenglykole, Polyvinylalkohol und partiell hydrolysierte Polyvinylacetate sowie Methylhydroxypropylcellulose. Bevorzugte organische neutrale Schutzkolloide sind Polyvinylalkohol und partiell hydrolysierte Polyvinylacetate sowie Methylhydroxypropylcellulose.

Organische anionische Schutzkolloide sind Natriumalginat, Polymethacrylsäure und ihre Copolymerisate, die Copolymerisate des Suffoethylacrylats und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure. Bevorzugte organisch anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Als anorganische Schutzkolloide, sind sogenannte Pickering-Systeme zu nennen, die eine Stabilisierung durch sehr feine feste Partikel ermöglichen und in Wasser unlöslich, aber dispergierbar sind oder unlöslich und nicht dispergierbar in Wasser, aber benetzbar von dem Pestizid oder dem unpolaren Lösungsmittel sind. Die Wirkweise und ihr Einsatz ist in der EP-A-1 029 018 sowie der EP-A-1 321 182 beschrieben.

Bevorzugt verwendet man organische Schutzkolloide gegebenenfalls in Mischung mit anorganischen Schutzkolloiden.

Im allgemeinen werden die Schutzkolloide in Mengen von 0,1 bis 15 Gew.-%, vorzugsweise von 0,5 bis 10 Gew.-% eingesetzt, bezogen auf die Wasserphase. Für anorganische Schutzkolloide werden dabei bevorzugt Mengen von 0,5 bis 15 Gew.-%, bezogen auf die Wasserphase, gewählt. Organische Schutzkolloide werden bevorzugt in Mengen von 0,1 bis 10 Gew.-% eingesetzt, bezogen auf die Wasserphase der Emulsion.

Gemäß einer Ausführungsform werden anorganische Schutzkolloide sowie ihre Mischungen mit organischen Schutzkolloiden bevorzugt. Gemäß einer weiteren Ausführungsform werden organisch neutrale Schutzkolloide bevorzugt. Besonders bevorzugt werden OH-Gruppen tragende Schutzkolloide wie Polyvinylalkohole und teilhydrolysierte Polyvinylacetate.

Im allgemeinen werden Polyvinylalkohol und/oder teilhydrolysiertes Polyvinylacetat in einer Gesamtmenge von mindestens 3 Gew.-% eingesetzt, bezogen auf die Mikrokapseln (ohne Schutzkolloid). Meist werden höchstens 15 Gew.% Polyvinylalkohol eingesetzt. Dabei ist es möglich, weitere oben genannte Schutzkolloide zusätzlich zu der bevorzugte Mengen Polyvinylalkohol oder teilhydrolysiertem Polyvinylacetat zuzusetzen. Bevorzugt werden die Mikrokapseln nur mit Polyvinylalkohol und/oder teilhydrolysiertem Polyvinylacetat und ohne Zusatz weiterer Schutzkolloide hergestellt.

Gemäß einer weiteren Ausführungsform werden Mischungen organischer Schutzkolloide wie Polyvinylalkohole zusammen mit Cellulosederivaten bevorzugt.

Polyvinylalkohol ist erhältlich durch Polymerisieren von Vinylacetat, gegebenenfalls in Gegenwart von Comonomeren, und Hydrolyse des Polyvinylacetats unter Abspaltung der Acetylgruppen unter Bildung von Hydroxylgruppen. Der Hydrolysegrad der Polymeren kann beispielsweise 1 bis 100 % betragen und liegt bevorzugt in dem Bereich von 50 bis 100 % insbesondere von 65 bis 95 %. Unter teilhydrolysierten Polyvinylacetaten ist im Rahmen dieser Anmeldung ein Hydrolysegrad von < 50% und unter Polyvinylalkohol vorn ≥ 50 bis 100 % zu verstehen. Die Herstellung von Homo- und Copolymerisaten von Vinylacetat sowie die Hydrolyse dieser Polymerisate unter Bildung von Vinylalkoholeinheiten enthaltenden Polymeren ist allgemein bekannt. Vinylalkoholeinheiten enthaltende Polymere werden beispielsweise als Mowiol^{®} Marken von Kuraray Specialities Europe (KSE) vertrieben. Bevorzugt werden Polyvinylalkohole und/oder teilhydrolysierte Polyvinylacetate, deren Viskosität einer 4 gew.-%igen wässrigen Lösung bei 20 °C nach DIN 53015 einen Wert im Bereich von 3 bis 56 mPa·s aufweist, bevorzugt einem Wert von 14 bis 45 mPa·s. Bevorzugt werden Polyvinylalkohole mit einem Hydrolysegrad von ≥ 65%, bevorzugt ≥ 70% insbesondere ≥ 75%. Der Einsatz von Polyvinylalkohol und/oder teilhydrolysiertem Polyvinylacetat führt zu stabilen Emulsionen auch bei kleinen mittleren Tröpfchengröße.

Üblicherweise entspricht die Größe der Öltröpfchen nahezu der Größe der nach der Polymerisation vorliegenden Mikrokapseln.

Als Radikalstarter für die radikalisch ablaufende Polymerisationsreaktion können die üblichen Peroxo- und Azoverbindungen, zweckmäßigerweise in Mengen von 0,2 bis 5 Gew.-%, bezogen auf das Gewicht der Monomere, eingesetzt werden. Je nach Aggregatzustand des Radikalstarters und seinem Löslichkeitsverhalten kann er als solcher, bevorzugt jedoch als Lösung, Emulsion oder Suspension zugeführt werden, wodurch sich insbesondere kleine Stoffmengen Radikalstarter präziser dosieren lassen.

Als bevorzugte Radikalstarter sind tert.-Butylperoxoneodecanoat, tert.-Amylperoxypivalat, Dilauroylperoxid, tert.-Amylperoxy-2-ethylhexanoat, 2,2'-Azobis-(2,4-dimethyl)valeronitril, 2,2'-Azobis-(2-methylbutyronitril), Dibenzoylperoxid, tert.-Butylper-2-ethylhexanoat, Di-tert.-butylperoxid, tert.-Butylhydroperoxid, 2,5-Dimethyl-2,5-di-(tert.-butylperoxy)hexan und Cumolhydroperoxid zu nennen. Besonders bevorzugte Radikalstarter sind Di-(3,5,5-trimethylhexanoyl)-peroxid, 4,4'-Azobisisobutyronitril, tert.-Butylperpivalat und Dimethyl-2,2-azobisisobutyrat. Diese weisen eine Halbwertzeit von 10 Stunden in einem Temperaturbereich von 30 bis 100°C auf.

Weiterhin ist es möglich zur Polymerisation dem Fachmann bekannte Regler in üblichen Mengen zuzusetzen wie tert-Dodecylmercaptan oder Ethylhexylthioglycolat.

In der Regel führt man die Polymerisation bei 20 bis 100°C, vorzugsweise bei 40 bis 95°C durch. Eine gängige Verfahrensvariante ist eine Reaktionstemperatur beginnend bei 60°C, die im Verlauf der Reaktion auf 85°C erhöht wird. Vorteilhafte Radikalstarter haben eine 10-Stunden Halbwertszeit im Bereich von 45 bis 65°C wie t-Butyl-perpivalat. Nach einer weiteren Verfahrensvariante wählt man ein Temperaturprogramm, welches bei entsprechend höheren Reaktionstemperaturen startet. Für Anfangstemperaturen um die 85°C werden Radikalstarter mit einer 10-Stunden Halbwertszeit im Bereich von 70 bis 90°C bevorzugt wie t-Butylper-2-ethylhexanoat.

Zweckmäßigerweise wird die Polymerisation bei Normaldruck vorgenommen, jedoch kann man auch bei vermindertem oder leicht erhöhtem Druck z. B. bei einer Polymerisationstemperatur oberhalb 100°C, arbeiten, also etwa im Bereich von 0,5 bis 5 bar. Die Reaktionszeiten der Polymerisation betragen normalerweise 1 bis 10 Stunden, meistens 2 bis 5 Stunden.

Eine erfindungsgemäße Verfahrensvariante unter Einsatz von Polyvinylalkohol und/oder teilhydrolysiertem Polyvinylacetat ermöglicht eine vorteilhafte Verfahrensweise, gemäß der direkt bei erhöhter Temperatur dispergiert und polymerisiert wird.

Man kann auf diese Weise Mikrokapseln mit einer gewünschten mittleren Teilchengröße herstellen, wobei die Teilchengröße in an sich bekannter Weise über die Scherkraft, die Rührgeschwindigkeit, und seine Konzentration eingestellt werden kann.

Im Anschluss an die eigentliche Polymerisationsreaktion bei einem Umsatz von 90 bis 99 Gew.-% ist es in der Regel vorteilhaft, die wässrigen Mikrokapseldispersionen weitgehend frei von Geruchsträgem, wie Restmonomere und anderen flüchtigen organischen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Ferner kann es chemisch geschehen, wie in der WO 99/24525 beschrieben, vorteilhaft durch redoxinitiierte Polymerisation, wie in der DE-A 44 35 423, DE-A 44 19 518 und DE-A 44 35 422 beschrieben.

Um den Restmonomergehalt darüber hinaus zu senken, ist gemäß einer Ausführungsform die erneute Zugabe eines Radikalstarters erforderlich, was den Beginn der Nachpolymerisation definiert. Gemäß einer bevorzugten Ausführungsform löst man im Anschluss an die Kapselbildung eine Nachpolymerisation mit Salzen der Peroxodischwefelsäure als Radikalstarter aus. Geeignete Salze sind insbesondere Ammonium-, Natrium- und Kaliumperoxodischwefelsäure. Die Alkalisalze der Peroxodischwefelsäure sind wasserlöslich und starten die Nachpolymerisation in der bzw. aus der Wasserphase heraus. Die Salze der Peroxodischwefelsäure werden zweckmäßigerweise in Mengen von 0,2 bis 5 Gew.-%, bezogen auf das Gewicht der Monomere, eingesetzt. Dabei ist es möglich sie auf einmal oder über einen gewissen Zeitraum zuzudosieren. Die Temperatur für die Nachpolymerisation beträgt üblicherweise 60 bis 100 °C. Die Dauer der Nachpolymerisation beträgt in der Regel 0,5 bis 5 Stunden.

Gemäß dieser bevorzugten Ausführungsform mit einer Nachpolymerisation mit einem oder mehreren Salzen der Peroxodischwefelsäure als Radikalstarter gelangt man zu besonders geruchsarmen Mikrokapseln. Wenn erforderlich, kann die Nachpolymerisation durch Zugabe von Reduktionsmitteln wie Natriumbisulfit auch noch bei tieferen Temperaturen durchgeführt werden. Die Zugabe von Reduktionsmitteln kann den Restmonomergehalt weiter verringern. Gegenüber gängigen Nachpolymersiationsinitiatoren bestehend aus organischen, wasserlöslichen Peroxo- oder Azo-Verbindungen wie ter.-Butylhydroperoxid, deren Zerfall ggf. durch Zugabe eines Reduktionsmittels wie Ascorbinsäure beschleunigt werden kann, zeigen die Salze der Peroxodischwefelsäure im Endprodukt deutlich geringere Mengen an Geruchsträgem wie beispielsweise Aldehyden.

Die erfindungsgemäßen Mikrokapseln lassen sich direkt als wässrige Mikrokapseldispersion oder in Form eines Pulvers verarbeiten. Bevorzugt liegen die Mikrokapseln in Form einer wässrigen Dispersion vor.

Der Begriff agrochemischer Wirkstoff (auch Pestizide genannt) bezeichnet mindestens einen Wirkstoff ausgewählt aus der Gruppe der Fungizide, Insektizide, Nematizide, Herbizide, Safener und/oder Wachstumsregulatoren. Bevorzugte agrochemische Wirkstoffe sind Fungizide, Insektizide, Herbizide, und Wachstumsregulatoren. Auch Mischungen von agrochemischen Wirkstoffen aus zwei oder mehr der vorgenannten Klassen können verwendet werden. Der Fachmann ist vertraut mit solchen Pestiziden, die beispielsweise in Pesticide Manual, 14th Ed. (2006), The British Crop Protection Council, London, gefunden werden können. Geeignete Insektizide sind Insektizide der Klasse der Carbamate, Organophophate, Organochlor-Insektizide, Phenylpyrazole, Pyrethroide, Neonicotinoide, Spinosine, Avermectine, Milbemycine, Juvenil Hormon Analoga, Alkylhalide, Organozinn-Verbindungen, Nereistoxin-Analoga, Benzoylharnstoffe, Diacylhydrazine, METI Akarizide, sowie Insektizide wie Chloropicrin, Pymetrozin, Flonicamid, Clofentezin, Hexythiazox, Etoxazol, Diafenthiuron, Propargit, Tetradifon, Chlorfenapyr, DNOC, Buprofezin, Cyromazin, Amitraz, Hydramethylnon, Acequinocyl, Fluacrypyrim, Rotenon, oder deren Derivate. Geeignete Fungizide sind Fungizide der Klassen Dinitroaniline, Allylamine, Anilinopyrimidine, Antibiotica, aromatische Kohlenwasserstoffe, Benzenesulfonamide, Benzimidazole, Benzisothiazole, Benzophenone, Benzothiadiazole, Benzotriazine, Benzylcarbamate, Carbamates, Carboxamide, Carbonsäureamide, Chloronitrile, Cyanoacetamideoxime, Cyanoimidazole, Cyclopropanecarboxamide, Dicarboximide, Dihydrodioxazine, Dinitrophenylcrotonate, Dithiocarbamate, Dithiolane, Ethylphosphonate, Ethylaminothiazolcarboxamide, Guanidines, Hydroxy-(2-amino-)pyrimidine, Hydroxyanilides, Imidazole, Imidazolinone, Anorganika, Isobenzofuranone, Methoxyacrylate, Methoxycarbamates, Morpholines, N-Phenylcarbamate, Oxazolidinedione, Oximinoacetate, Oximinoacetamide, Peptidylpyrimidinnucleoside, Phenylacetamide, Phenylamide, Phenylpyrrole, Phenylharnstoffe, Phosphonate, Phosphorothiolate, Phthalamsäuren, Phthalimide, Piperazine, Piperidine, Propionamide, Pyridazinone, Pyridine, Pyridinylmethylbenzamide, Pyrimidinamine, Pyrimidine, Pyrimidinonehydrazone, Pyrroloquinolinone, Quinazolinone, Chinoline, Chinone, Sulfamide, Sulfamoyltriazole, Thiazolecarboxamide, Thiocarbamate, Thiophanate, Thiophenecarboxamide, Toluamide, Triphenylzinn Verbindungen, Triazine, Triazole. Geeignete Herbizide sind Herbizide der Klassen der Acetamide, Amide, Aryloxyphenoxypropionate, Benzamide, Benzofuran, Benzoesäuren, Benzothiadiazinone, Bipyridylium, Carbamate, Chloroacetamide, Chlorcarbonsäuren, Cyclohexanedione, Dinitroaniline, Dinitrophenol, Diphenylether, Glycine, Imidazolinone, Isoxazole, lsoxazolidinone, Nitrile, N-phenylphthalimide, Oxadiazole, Oxazolidinedione, Oxyacetamide, Phenoxycarbonsäuren, Phenylcarbamate, Phenylpyrazole, Phenylpyrazoline, Phenylpyridazine, Phosphinsäuren, Phosphoroamidate, Phosphorodithioate, Phthalamate, Pyrazole, Pyridazinone, Pyridine, Pyridincarbonsäuren, Pyridinecarboxamide, Pyrimidindione, Pyrimidinyl(thio)benzoate, Chinolincarbonsäuren, Semicarbazone, Sulfonylaminocarbonyltriazolinone, Sulfonylharnstoffe, Tetrazolinone, Thiadiazole, Thiocarbamate, Triazine, Triazinone, Triazole, Triazolinone, Triazolocarboxamide, Triazolopyrimidine, Triketone, Uracile, Harnstoffe.

Bevorzugte Pestizide sind bei 25 °C zu mindestens 10 g/l, bevorzugt mindestens 100 g/l und insbesondere mindestens 200 g/l, in einem aromatischen Kohlenwasserstoffgemisch mit einem Siedepunktbeginn (IBP, Initial boiling point nach ASTM D86) von mindestens 225 °C (wie Solvesso® 200) klar löslich. Besonders bevorzugte Pestizide sind Metazachlor und Pyraclostrobin.

Das Pestizid liegt im Kapselkern bevorzugt in gelöster Form vor. Das heißt, dass bevorzugt mindestens 90 Gew.%, insbesondere mindestens 98 Gew.% des Pestizides 24 h nach der Herstellung der Mikrokapseln in gelöster Form vorliegen.

Der Pestizid-haltige Kapselkern umfasst üblicherweise Pestizid. Bevorzugt umfasst der Kapselkern zusätzlich ein unpolares Lösungsmittel. Geeignete unpolare Lösungsmittel sind höchstens zu 10 Gew.%, bevorzugt zu höchstens 3 Gew.%, und insbesondere zu höchstens 0,5 Gew.% in Wasser bei 20 °C löslich. Beispiele sind Aromaten, Aliphaten, Pflanzenöle und Ester von Pflanzenölen.

Beispiele für Aromaten sind Benzol, Toluol, Xylol, Naphthalin, Biphenyl, o- oder m-Terphenyl, ein- oder mehrfach C₁-C₂₀-alkylsubstituierte aromatische Kohlenwasserstoffe wie Dodecylbenzol, Tetradecylbenzol, Hexadecylbenzol, Methylnaphthalin, Diisopropylnaphthalin, Hexylnaphthalin oder Decylnaphthalin. Geeignet sind auch technische Aromatengemische im Siedebereich von 30 bis 280 °C sowie Gemische der vorgenannten Aromaten. Bevorzugte Aromaten sind technische Aromatengemische im Siedebereich von 30 bis 280 °C.

Beispiele für Aliphaten sind gesättigte oder ungesättigte C₁₀-C₄₀-Kohlenwasserstoffe, die verzweigt oder bevorzugt linear sind, z. B. wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan, cyclische Kohlenwasserstoffe, z.B. Cyclohexan, Cyclooctan, Cyclodecan, Mineralöle umfassend gesättigte Kohlenwasserstoffe, oder hochdruckhydriertes Mineralöl (sogenannte Weißöle). Geeignet sind auch Gemische der vorgenannten Aliphaten. Bevorzugte Aliphaten sind Mineralöle.

Beispiele für Pflanzenöle und Ester von Pflanzenölen sind Rapsöl, Sojaöl, Palmöl, Sonnenblumenöl, Maiskemöl, Leinsamenöl, Rüböl, Olivenöl, Baumwollsaatöl, Rapsölmethylester, Rapsölethylester, sowie Gemische von Pflanzenölen, von Estern von Pflanzenölen oder von beidem.

Das Gewichtsvehältnis von unpolarem Lösungsmittel zu Pestizid liegt meist im Bereich 1 : 20 bis 20 : 1, bevorzugt bei 1 : 10 bis 8 : 1, und insbesondere bevorzugt bei 1 : 8 bis 4 : 1.

Die Erfindung betrifft auch eine agrochemische Formulierung umfassend die erfindungsgemäßen Mikrokapseln, wobei die Mikrokapseln in wässriger Lösung suspendiert sind. Der Gehalt an Pestizid, das im Pestizi-haltigen Kapselkern enthalten ist, liegt meist bei 10 bis 600 g pro Liter agrochemische Formulierung, bevorzugt bei 50 bis 400 g/l, insbesondere bei 80 bis 300 g/l. Der Gehalt an Mikrokapseln liegt meist bei 20 bis 70 Gew.%, bevorzugt bei 30 bis 55 Gew.%, bezogen auf die agrochemische Formulierung. Die wässrige Lösung umfasst meist mindestens 10 Gew.%, bevorzugt mindestens 30 Gew.% und insbesondere mindestens 60 Gew.% Wasser.

Die agrochemischen Formulierungen können weiterhin auch für Pflanzenschutzmittel übliche Hilfsmittel enthalten, wobei sich die Wahl der Hilfsmittel nach der konkreten Anwendungsform bzw. dem Wirkstoff richtet.

Beispiele für geeignete Hilfsmittel sind Lösungsmittel, oberflächenaktive Stoffe (wie weitere Solubilisatoren, Schutzkolloide, Netzmittel und Haftmittel), organische und anorganische Verdicker, Bakterizide, Frostschutzmittel, Entschäumer, ggf. Farbstoffe und Kleber (z. B. für Saatgutbehandlung).

Als Lösungsmittel kommen Wasser, organische Lösungsmittel wie Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Methanol, Ethanol, Propanol, Butanol und Cyclohexanol, Glykole, Ketone wie Cyclohexanon, gamma-Butyrolacton, Dimethylfettsäureamide, Fettsäuren und Fettsäureester und stark polare Lösungsmittel, z.B. Amine wie N-Methylpyrrolidon, in Betracht. Grundsätzlich können auch Lösungsmittelgemische verwendet werden sowie Gemische aus den vorstehend genannten Lösungsmitteln und Wasser.

Als oberflächenaktive Stoffe (Adjuvanzien, Netz-, Haft-, Dispergier- oder Emulgiermittel) kommen die Alkali-, Erdalkali-, Ammoniumsalze von aromatischen Sulfonsäuren, z. B. von Lignin-(Borresperse®-Typen, Borregaard, Norwegen), Phenol-, Naphthalin-(Morwet®-Typen, Akzo Nobel, USA) und Dibutylnaphthalinsulfonsäure (Nekal^{®}-Typen, BASF, Deutschland), sowie von Fettsäuren, Alkyl- und Alkylarylsulfonaten, Alkyl-, Laurylether- und Fettalkoholsulfaten, sowie Salze sulfatierter Hexa-, Hepta- und Octadecanole sowie von Fettalkoholglykolethern, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen sowie Proteine, denaturierte Proteine, Polysaccharide (z.B. Methylcellulose), hydrophob modifizierte Stärken, Polyvinylalkohol (Mowiol^{®}-Typen, Clariant, Schweiz), Polycarboxylate (Sokalan^{®}-Typen, BASF, Deutschland), Polyalkoxylate, Polyvinylamin (Lupamin^{®}-Typen, BASF, Deutschland), Polyethylenimin (Lupasol^{®}-Typen. BASF, Deutschland), Polyvinylpyrrolidon und deren Copolymere in Betracht.

Beispiele für Verdicker (d. h. Verbindungen, die der Zusammensetzung ein modifiziertes Fließverhalten verleihen, d. h. hohe Viskosität im Ruhezustand und niedrige Viskosität im bewegten Zustand) sind Polysaccharide sowie organische und anorganische Schichtmineralien wie Xanthan Gum (Kelzan^{®}, CP Kelco, USA), Rhodopol^{®} 23 (Rhodia, Frankreich) oder Veegum^{®} (R.T. Vanderbilt, USA) oder Attaclay^{®} (Engelhard Corp., NJ, USA).

Bakterizide können zur Stabilisierung der Zusammensetzung zugesetzt werden. Beispiele für Bakterizide sind solche basierend auf Diclorophen und Benzylalkoholhemiformal (Proxel^{®} der Fa. ICI oder Acticide^{®} RS der Fa. Thor Chemie und Kathon^{®} MK der Fa. Rohm & Haas) sowie Isothiazolinonderivaten wie Alkylisothiazolinonen und Benzisothiazolinonen (Acticide^{®} MBS der Fa. Thor Chemie). Beispiele für geeignete Frostschutzmittel sind Ethylenglycol, Propylenglycol, Harnstoff und Glycerin. Beispiele für Entschäumer sind Silikonemulsionen (wie z. B. Silikon^{®} SRE, Wacker, Deutschland oder Rhodorsil^{®}, Rhodia, Frankreich), langkettige Alkohole, Fettsäuren, Salze von Fettsäuren, fluororganische Verbindungen und deren Gemische.

Die erfindungsgemäße agrochemische Formulierung wird meist vor der Anwendung verdünnt um den sog. Tankmix herzustellen. Zur Verdünnung kommen Mineralöffraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht. Bevorzugt wird Wasser verwendet. Die verdünnte Zusammensetzung wird üblicherweise durch Versprühen oder Vernebeln angewendet. Zu dem Tankmix können Öle verschiedenen Typs, Netzmittel, Adjuvants, Herbizide, Bakterizide, Fungizide unmittelbar vor der Anwendung (Tankmix) zugesetzt werden. Diese Mittel können zu den erfindungsgemäßen Zusammensetzungen im Gewichtsverhältnis 1:100 bis 100:1, bevorzugt 1:10 bis 10:1 zugemischt werden. Die Pestizidkonzentration im Tankmix kann in größeren Bereichen variiert werden. Im Allgemeinen liegen sie zwischen 0,0001 und 10%, vorzugsweise zwischen 0,01 und 1%. Die Aufwandmengen liegen bei der Anwendung im Pflanzenschutz je nach Art des gewünschten Effektes zwischen 0,01 und 2,0 kg Wirkstoff pro ha.

Die vorliegende Erfindung betrifft auch die Verwendung der erfindungsgemäßen Mikrokapseln zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Mikrokapseln auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt.

Die vorliegende Erfindung bietet verschiedenste Vorteile: Die Mikrokapseln setzen das Pestizid sehr gleichmäßig frei. Das Pestizid wird über mehrere Tage oder Wochen freigesetzt. Die Freisetzung dauert länger als bei vergleichbaren Mikrokapseln, die zusätzlich zu den Polyvinylmonomeren auch Divinylmonomere als Vernetzer einsetzen. Die Mikrokapseln sind leicht herzustellen. Sie sind gut verträglich für die agrochemische Anwendung. Die Mikrokapseln ermöglichen eine hohe Beladung mit Pestizid. Durch die Vernetzung mit Polyvinylmonomeren weisen die Mikrokapseln eine sehr gute mechanische Stabilität auf (z. B. beim Rühren), so dass das Pestizid nicht vorzeitig freigesetzt wird bereits beim Ansetzen im Tankmix unter Rühren, sondern erst langsam nach dem Ausbringen.

Die nachfolgenden Beispiele sollen die Erfindung näher erläutern.

### Beispiele

| | |
|---|---|
| Atlas® G 5000: | Polyalkylenglykolether, HLB-Wert 17, kommerziell erhältlich von Uniquema. |
| Atlox® 4913: | Ein Methylmethacrylat Pfopf-Copolymer (Reactionsproduckt von Methylmethacrylat, Methacrylsäure und Methoxy-PEG-methacrylat), 33 wt% Polymer, 33 wt% Propylenglykol, 1 wt% Xylen, 33 wt% Wasser (kommerziell erhältlich von Uniquema). |
| Attaflow® FL: | Attapulgit Verdicker, kommerziell erhältlich von BASF. |
| Mowiol®: | hydrolysierter Polyvinylalkohol, Viscosität 12,5-17,5 mPas (DIN 53015), kommerziell erhältlich von Kuraray |
| Solvesso® 200: | Technische Mischung aromatischer Kohlenwasserstoffe, Aromatengehalt >99 vol% (ASTM D1319), IBP (Initial Boiling Point) 232 °C, DP (Decomposition Point) 277 °C (jeweils nach ASTM D86), kommerziell erhältlich von Exxon Mobil. |
| MMA | Methylmethacrylat |
| MAS | Methacrylsäure |
| PETIA | Eine technische Mischung von Tri- und Tetraacrylat des Pentaerythrits |
| PMMA | Polymethylmethacrylat |

Bei den Prozentangaben in den Beispielen handelt es sich um Gewichtsprozent sofern nicht anders angegeben. Die Teilchengröße des Mikrokapselpulvers wurde mit einem Malvem Particle Sizer Typ 3600E gemäß einer Standardmessmethode bestimmt, die in der Literatur dokumentiert ist.

Bestimmung der Abdampfrate: Zur Vorbehandlung wurden 2 g der Mikrokapseldispersion in einem Metallschälchen zwei Stunden lang bei 105°C getrocknet, um etwaiges Restwasser zu entfernen. Dann wurde das Gewicht (mₒ) ermittelt. Nach einstündigem Erhitzen auf 180°C wird nach abkühlen erneut das Gewicht (m₁) ermittelt. Die Gewichtsdifferenz (m₀ - m₁) bezogen auf m₀ und multipliziert mit 100 gibt die Abdampfrate in % an. Je kleiner der Wert, desto dichter sind die Mikrokapseln. Dabei ist zu beachten, dass Vergleiche in der Abdampfrate immer bei vergleichbaren Kapselgrößen und Stabilisatorsystemen durchgeführt werden sollten.

### Beispiel 1

Die Wasserphase wurde bei 40 °C vorgelegt, in diese wurde Zulauf 1 und 2 mit einem schnelllaufenden Dissolverrührer bei 3500 Upm dispergiert. Die Emulsion wurde unter Rühren mit einem Ankerrüher mit Zugabe 1 versetzt und in 60 Minuten auf 70 °C, innerhalb von weiteren 120 Minuten auf 85 °C aufgeheizt. Dann wurde Zulauf 3 zugegeben, auf Raumtemperatur abgekühlt und Zulauf 4 versetzt innerhalb 80 min. Es wurde eine Mikrokapseldispersion mit einer mittleren Teilchengröße von D[4,3] = 6,03 µm und einem Feststoffgehalt von 42.05 % erhalten.

### Wasserphase:

| | |
|---|---|
| 220 g | Wasser |
| 95 g | einer 5 gew.-%igen wässrigen Lösung von Methylhydroxypropylcellulose (Viskosität von 90 -125 mPas, Brookfield, 2 Gew.%, 20 °C, 20 rpm) |
| 23,8 g | einer 10 gew.-%igen wässrigen Lösung von Polyvinylalkohol (vollständig hydrolysiert, Viscosität 12,5-17,5 mPas (DIN 53015)) |
| 1,1 g | einer 2,5 gew.-%igen wässrigen Natriumnitrit-Lösung |

### Zugabe 1

| | |
|---|---|
| 0,35 g | einer 75% igen Lösung von t-Butylperpivalat in aliphat. Kohlenwasserstoffen |
| 0,43 g | Wasser |

### Zulauf 1:

| | |
|---|---|
| 88 g | Metazachlor |
| 132 g | Solvesso 200 |

### Zulauf 2:

| | |
|---|---|
| 7,8 g | n-Butylacrylat |
| 10,2 g | PETIA |
| 7,8 g | Methacrylsäure |

### Zulauf 3:

| | |
|---|---|
| 2,7 g | einer 10 gew.-%igen wässrigen t-Butylhydroperoxid Lösung |

### Zulauf 4:

| | |
|---|---|
| 0,15 g | Ascorbinsäure |
| 14,0 g | Wasser |

### Beispiel 2

Es wurde analog zu Beispiel 1 vorgegangen, jedoch bestand der Zulauf 2 aus folgenden Komponenten:
Zulauf 2:

| | |
|---|---|
| 7,8 g | Methylmethacrylat |
| 10,2 g | PETIA |
| 7,8 g | Methacrylsäure |

Es wurde eine Mikrokapseldispersion mit einer mittleren Teilchengröße von D[4,3] = 6,04 µm und einem Feststoffgehalt von 42.05 % erhalten.

### Beispiel 3

Es wurde analog zu Beispiel 1 vorgegangen, jedoch bestand der Zulauf 2 aus folgenden Komponenten:
Zulauf 2:

| | |
|---|---|
| 16,5 g | Methylmethacrylat |
| 22,0 g | Pentaerythrittriacrylat (PETIA) |
| 16,5 g | Methacrylsäure |

Am Ende wurde mit wässriger Natronlauge neutralisiert. Es wurde eine Mikrokapseldispersion mit einer mittleren Teilchengröße von 4,84 µm (D4,3) und einem Feststoffgehalt von 45,76 % erhalten. Die Abdampfrate bei 130 °C (1h) betrug 4,3 %.

### Beispiel 4

Es wurde analog zu Beispiel 1 vorgegangen, jedoch bestand der Zulauf 2 aus folgenden Komponenten:
Zulauf 2:

| | |
|---|---|
| 5,16 g | Methylmethacrylat |
| 10,32 g | Pentaerythrittriacrylat (PETIA) |
| 10,32 g | Methacrylsäure |

Am Ende wurde mit wässriger Natronlauge neutralisiert. Es wurde eine Mikrokapseldispersion mit einer mittleren Teilchengröße von 6,71 µm (D4,3) und einem Feststoffgehalt von 42,45 % erhalten. Die Abdampfrate bei 130 °C (1h) betrug 13,5 %.

### Beispiel 5 (Vergleichsbeispiel, nicht erfindungsgemäß)

Es wurde analog zu Beispiel 1 vorgegangen, jedoch wurde im Zulauf 2 Pentaerythrittriacrylat (PETIA) ersetzt durch die selbe Menge Butandioldiacrylat. Es wurde eine Mikrokapseldispersion mit einer mittleren Teilchengröße von D[4,3] = 7,60 µm und einem Feststoffgehalt von 42,05 % erhalten.

### Beispiel 6 (Vergleichsbeispiel, nicht erfindungsgemäß)

Es wurde analog zu Beispiel 2 vorgegangen, jedoch wurde im Zulauf 2 Pentaerythrittriacrylat (PETIA) ersetzt durch die selbe Menge Butandioldiacrylat. Es wurde eine Mikrokapseldispersion mit einer mittleren Teilchengröße von D[4,3] = 8,02 µm und einem Feststoffgehalt von 42,05 % erhalten.

### Beispiel 7 (Vergleichsbeispiel, nicht erfindungsgemäß)

Es wurde analog zu Beispiel 4 vorgegangen, jedoch wurde im Zulauf 2 Pentaerythrittriacrylat (PETIA) ersetzt durch die selbe Menge Butandioldiacrylat. Es wurde eine Mikrokapseldispersion mit einer mittleren Teilchengröße von 6,61 µm (D4,3) und einem Feststoffgehalt von 42,07 % erhalten. Die Abdampfrate bei 130 °C (1 h) betrug 30,18 %.

### Beispiel 8 - Freisetzung des Pestizides

Von der Mikrokapseldispersion aus den vorgenannten Beispielen wurde eine Menge, die 300 mg Metazachlor enthielt, eingewogen und mit destilliertem Wasser auf 1,0 L aufgefüllt (= ca. 75% der in 1 L Wasser maximal löslichen Menge Metazachlor) und bei Raumtemperatur gerührt. Dabei zeigte sich die gute mechanische Stabilität, denn es wurde kein Metazachlor freigesetzt beim Rühren wie die sehr niederen Startwerte in den Tabellen 1 - 4 zeigen.

Von der erhaltenen verdünnten Mischung wurde in verschiedenen Zeitabständen jeweils 5 ml abgenommen, diese über einen 0.22 µm Filter filtriert und der Metazachlor-Gehalt über UV-VIS-Spektroskopie photometrisch mit Hilfe einer Eichgerade bestimmt. Um sicherzugehen, dass keine Verunreinigung die Messung störte, wurde die Absorption bei verschiedenen Wellenlängen bestimmt. Der so ermittelte Gehalt von Metazachlor in der wässrigen Lösung ist in Tabelle 1 zusammengefasst. Die Werte zeigen wieviel Metazachlor aus der Mikrokapseln in die wässrige Phase freigesetzt wurde.

**Tabelle 1**

| Zeit [h] | Beispiel 1 Freisetzung [%] | Vergleichsbeispiel 5 Freisetzung [%] |
|---|---|---|
| 0,5 | 10 | 86 |
| 1 | 12 | 92 |
| 2 | 13 | 98 |
| 4 | 17 | 100 |
| 8 | 19 | 100 |
| 24 | 26 | 100 |
| 48 | 26 | 100 |
| 72 | 29 | - |
| 192 | 50 | 100 |
| 384 | 58 | - |
| 744 | 68 | - |
| 1536 | 76 | - |

**Tabelle 2**

| Zeit [h] | Beispiel 2 Freisetzung [%] | Vergleichsbeispiel 6 Freisetzung [%] |
|---|---|---|
| 0,5 | - | 19 |
| 1 | 1,3 | 24 |
| 4 | 1,6 | 36 |
| 8 | 1,9 | 40 |
| 24 | 2,3 | 46 |
| 48 | 2,6 | 54 |
| 192 | 3,7 | 76 |
| 384 | 5,0 | 83 |
| 792 | 5,1 | - |

**Tabelle 3**

| Zeit [h] | Beispiel 4 Freisetzung [%] | Vergleichsbeispiel 7 Freisetzung [%] |
|---|---|---|
| 1 | 10 | 22 |
| 4,5 | 13 | 36 |
| 8 | 14 | 43 |
| 24 | 16 | 56 |
| 96 | 27 | 81 |
| 192 | 24 | 85 |
| 360 | 29 | 92 |
| 768 | 41 | 100 |
| 1536 | 50 | - |

**Tabelle 4**

| Zeit [h] | Zeit [Tage] | Beispiel 3 Freisetzung [%] |
|---|---|---|
| 4 | 0,17 | 4 |
| 7 | 0,29 | 5 |
| 24 | 1 | 6 |
| 48 | 2 | 7 |
| 120 | 5 | 12 |
| 192 | 8 | 10 |
| 384 | 16 | 11 |
| 792 | 33 | 27 |
| 1536 | 64 | 40 |
| 3072 | 128 | 49 |

### Beispiel 9

Die Mikrokapseln A und B wurden hergestellt mit den Konzentrationen laut Tabelle 5. Die Wasserphase umfassend Wasser, Schutzkolloid und Natriumnitril wurde hergestellt. Die Ölphase wurde hergestellt indem Pyraclostrobin in Solvesso in der Wärme gelöst wurde, und anschließend unter Rühren zur Wasserphase zugegeben. Danach wurden die Monomere zugesetzt. Die zweiphasige Mischung wurde bei 70 °C für 30 min gerührt und auf 50 °C agbekühlt, die resulierende Emulsion wurde unter Rühren mit t-Butylperpivalat versetzt und 2 h auf 70 °C erhitzt und anschließend auf 1,5 h bei 85 °C gehalten. Anschließend setzte man t-Butylhydroperoxid und Ascorbinsäure zu innerhalb 60 min während auf 20 °C abgekühlt wurde. Die so erhaltene Suspension von Pyraclostrobin-haltigen Mikrokapseln konnte ohne weitere Aufarbeitung weiterverwendet werden.

**Tabelle 5: Rezepturen (Konzentration in g/l)**

| | A | B |
|---|---|---|
| Pyraclostrobin | 250 | 250 |
| MMA | 24 | 19,2 |
| MAS | 24 | 19,2 |
| PETIA | 32 | 25,6 |
| Ascorbinsäure | 0,1 | 0,08 |
| Atlas G 5000 | 0 | 6,64 |
| Atlox 4913 | 0 | 6,64 |
| Attaflow FL | 0 | 4,28 |
| Antischaummittel | 0 | 0,22 |
| Mowiol | 321,8 | 257,4 |
| Natriumnitrit | 2,8 | 2,24 |
| Solvesso 200 | 64 | 51,2 |
| t-Butylperoxypivalat | 0,57 | 0,46 |
| t-Butylhydroperoxid | 18,4 | 14,72 |
| Wasser | ad 1000 ml | ad 1000 ml |

## Patentansprüche

1. Agrochemische Formulierung umfassend Mikrokapseln, wobei die Mikrokapseln in wässriger Lösung suspendiert sind, und
wobei die Mikrokapseln einen Pestizid-haltigen Kapselkern und eine Kapselwand umfassen, wobei die Kapselwand aufgebaut ist aus
| | |
|---|---|
| 30 bis 90 Gew.-% | einem oder mehrerer C₁-C₂₄-Alkyrester der Acryl- und/oder Methacrylsäure, Acrylsäure, Methacrylsäure und/oder Maleinsäure (Monomere I), |
| 10 bis 70 Gew.-% | einem oder mehrerer Polyvlnylmonomere (Monomer II), und |
| 0 bis 30 Gew.-% | einem oder mehrerer weiteren Monomere (Monomer III), die von den Monomeren I und II verschieden sind und die höchstens 5,0 Gew.% Divinylmonomere enthalten, |
jeweils bezogen auf das Gesamtgewicht der Monomere,
wobei der Kapselkern ein unpolares Lösungsmittel umfasst, und
wobei das Gewichtsverhältnis von unpolarem Lösungsmittel zu Pestizid im Bereich 1 : 20 bis 20 : 1 liegt.

2. Formulierung nach Anspruch 1, wobei Monomer III ausgewäht wird aus Itaconsäure, Maleinsäureanhydrid, 2-Hydroxyethylacrylat und -methacrylat, Acrylamido-2-methylpropansulfonsäure, Methacrylnitril, Acrylnitril, Methacrylamid, N-Vinylpyrrolidon, N-Methylolacrylamid, N-Methytolmethacrylamid, Dimethylaminoethylmethacrylat und Diethylaminoethylmethacrylat.

3. Formulierung nach Anspruch 1 oder 2, wobei Monomer I sowohl C₁-C₂₄-Alkylester der Acryl- und/oder Methacrylsäure (Monomere la) als auch ungesättigte C₃- und C₄-Carbonsäure (Monomere Ib) umfasst.

4. Formulierung nach Anspruch 3, wobei das Gewichtsverhältnis von Monomer la zu Monomer Ib im Bereich von 10 : 1 bis 1 : 10 liegt.

5. Formulierung nach einem der Ansprüche 1 bis 4, wobei das Polyvinylmonomer ausgewählt wird aus der Gruppe bestehend aus Trimethylolpropantriacrylat und - methacrylat, Pentaerythrittriallylether, Pentaerythrittetraallylether, Pentaerythrittriacrylat und Pentaerythrittetraacrylat sowie ihre technischen Mischungen.

6. Formulierung nach einem der Ansprüche 1 bis 5, wobei das unpolare Lösungsmittel zu höchstens 10 Gew.% in Wasser bei 20°C löslich ist.

7. Formulierung nach Anspruch 6, wobei das Gewichtsverhältnis von unpolarem Lösungsmittel zu Pestizid im Bereich 1 : 10 bis 8 : 1 liegt.

8. Formulierung nach einem der Ansprüche 1 bis 7, wobei das Gewichtsverhältnis von Kapselkern zu Kapselwand im Bereich von 50 : 1 bis 1 : 1 liegt.

9. Formulierung nach einem der Ansprüche 1 bis 8, wobei das Pestizid im Kapselkern in gelöster Form vorliegt.

10. Formulierung nach einem der Ansprüche 1 bis 9, wobei das Pestizid bei 25 °C zu mindestens 10 g/l in einem aromatischen Kohlenwasserstoff-Gemisch mit einem Siedepunktbeginn von mindestens 225 °C klar löslich ist.

11. Formulierung nach einem der Ansprüche 1 bis 10 enthaltend 20 bis 70 Gew.% Mikrokapseln, bezogen auf die agrochemische Formulierung.

12. Formulierung nach einem der Ansprüche 1 bis 11, wobei der Gehalt an Pestizid, das im Pestizid-haltigen Kapselkern enthalten ist, bei 10 bis 600 g pro Liter agrochemischer Formulierung liegt.

13. Verfahren zur Herstellung von Mikrokapseln gemäß einem der Ansprüche 1 bis 10, wobei man aus Monomeren, Radikalstarter, Schutzkolloid und dem einzukapselnden Pestizid eine Öl-Wasser-Emulsion herstellt, und die Polymerisation der Monomeren durch Erwärmung auslöst und gegebenenfalls durch weitere Temperaturerhöhung steuert.

14. Verfahren nach Anspruch 13, wobei man im Anschluss an die Kapselbildung eine Nachpolymerisation mit Salzen der Peroxodischwefelsäure als Radikalstarter auslöst.

15. Verwendung der agrochemischen Formulierung gemäß einem der Ansprüche 1 bis 12 zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Mikrokapseln auf die jeweiligen Schädlinge, deren Lebensraum oder die vor dem jeweiligen Schädling zu schützenden Pflanzen, den Boden und/oder auf unerwünschte Pflanze und/oder die Nutzpflanzen und/oder deren Lebensraum einwirken lässt.

## Claims

1. An agrochemical formulation comprising microcapsules, where the microcapsules are suspended in aqueous solution, and
where the microcapsules comprise a pesticide-containing capsule core and a capsule wall, where the capsule wall is constructed from
| | |
|---|---|
| 30 to 90% by weight | of one or more C₁-C₂₄-alkyl esters of acrylic acid and/or methacrylic acid, acrylic acid, methacrylic acid and/or maleic acid (monomers I), |
| 10 to 70% by weight | of one or more polyvinyl monomers (monomer II), and |
| 0 to 30% by weight | of one or more further monomers (monomer III), which are different from the monomers I and II and which comprise at most 5.0% by weight of divinyl monomers, |
in each case based on the total weight of the monomers,
where the capsule core comprises a nonpolar solvent, and
where the weight ratio of nonpolar solvent to pesticide is in the range 1 : 20 to 20 : 1.

2. The formulation according to claim 1, where monomer III is selected from itaconic acid, maleic anhydride, 2-hydroxyethyl acrylate and methacrylate, acrylamido-2-methylpropanesulfonic acid, methacrylonitrile, acrylonitrile, methacrylamide, N-vinylpyrrolidone, N-methylolacrylamide, N-methylolmethacrylamide, dimethylaminoethyl methacrylate and diethylaminoethyl methacrylate.

3. The formulation according to claim 1 or 2, where monomer I comprises both C₁-C₂₄-alkyl esters of acrylic acid and/or methacrylic acid (monomers Ia) and also unsaturated C₃- and C₄-carboxylic acid (monomers Ib).

4. The formulation according to claim 3, where the weight ratio of monomer Ia to monomer Ib is in the range from 10 :1 to 1 : 10.

5. The formulation according to any one of claims 1 to 4, where the polyvinyl monomer is selected from the group consisting of trimethylolpropane triacrylate and trimethacrylate, pentaerythritol triallyl ether, pentaerythritol tetraallyl ether, pentaerythritol triacrylate and pentaerythritol tetraacrylate, and their technical-grade mixtures.

6. The formulation according to any one of claims 1 to 5, where the nonpolar solvent is soluble in water at 20°C to at most 10% by weight.

7. The formulation according to claim 6, where the weight ratio of nonpolar solvent to pesticide is in the range 1 : 10 to 8 : 1.

8. The formulation according to any one of claims 1 to 7, where the weight ratio of capsule core to capsule wall is in the range from 50 : 1 to 1 : 1.

9. The formulation according to any one of claims 1 to 8, where the pesticide is present in dissolved form in the capsule core.

10. The formulation according to any one of claims 1 to 9, where the pesticide dissolves to give a clear solution at 25°C to at least 10 g/l in an aromatic hydrocarbon mixture with an initial boiling point of at least 225°C.

11. The formulation according to any one of claims 1 to 10 comprising 20 to 70% by weight of microcapsules, based on the agrochemical formulation.

12. The formulation according to any one of claims 1 to 11, where the content of pesticide which is present in the pesticide-containing capsule core is 10 to 600 g per liter of agrochemical formulation.

13. A process for the preparation of microcapsules according to any one of claims 1 to 10, which comprises preparing an oil-in-water emulsion from monomers, free-radical initiator, protective colloid and the pesticide to be encapsulated, and triggering the polymerization of the monomers by heating and, where necessary, controlling the polymerization by further increasing the temperature.

14. The process according to claim 13, where, after the capsule formation, an afterpolymerization is triggered with salts of peroxodisulfuric acid as free-radical initiator.

15. The use of the agrochemical formulation according to any one of claims 1 to 12 for controlling phytopathogenic fungi and/or undesired plant growth and/or undesired insect or mite infestation and/or for regulating the growth of plants, where the microcapsules are allowed to act on the pests in question, their habitat or the plants to be protected from the pest in question, the soil and/or on undesired plants and/or the useful plants and/or their habitat.

## Revendications

1. Formulation agrochimique comprenant des microcapsules, les microcapsules étant en suspension en solution aqueuse et les microcapsules comprenant un noyau de capsule contenant un pesticide et une paroi de capsule, la paroi de capsule étant formée à partir de
30 à 90% en poids d'un ou de plusieurs esters C₁-C₂₄-alkyliques de l'acide acrylique et/ou méthacrylique, d'acide acrylique, d'acide méthacrylique et d'acide maléique (monomères I),
10 à 70% en poids d'un ou de plusieurs monomères de polyvinyle (monomère II) et
0 à 30% en poids d'un ou de plusieurs autres monomères (monomère III) qui sont différents des monomères I et II et qui contiennent au plus 5,0% en poids de monomères de divinyle,
dans chaque cas par rapport au poids total des monomères,
le noyau de capsule comprenant un solvant non polaire, et
le rapport pondéral de solvant non polaire à pesticide étant situé dans la plage de 1:20 à 20:1.

2. Formulation selon la revendication 1, le monomère III étant choisi parmi l'acide itaconique, l'anhydride de l'acide maléique, l'acrylate et le méthacrylate de 2-hydroxyéthyle, l'acide acrylamido-2-méthylpropanesulfonique, le méthacrylonitrile, l'acrylonitrile, le méthacrylamide, la N-vinylpyrrolidone, le N-méthylolacrylamide, le N-méthylolméthacrylamide, le méthacrylate de diméthylaminoéthyle et le méthacrylate de diéthylaminoéthyle.

3. Formulation selon la revendication 1 ou 2, le monomère I comprenant tant des esters C₁-C₂₄-alkyliques de l'acide acrylique et/ou méthacrylique (monomères Ia) que des acides C₃-C₄-carboxyliques insaturés (monomère Ib).

4. Formulation selon la revendication 3, le rapport pondéral de monomère Ia au monomère Ib étant situé dans la plage de 10:1 à 1:10.

5. Formulation selon l'une quelconque des revendications 1 à 4, le monomère de polyvinyle étant choisi dans le groupe constitué par le triacrylate et le triméthacrylate de triméthylolpropane, le pentaérythritoltriallyléther, le pentaérythritoltétraallyléther, le triacrylate de pentaérythritol et le tétraacrylate de pentaérythritol ainsi que leurs mélanges techniques.

6. Formulation selon l'une quelconque des revendications 1 à 5, le solvant non polaire étant soluble dans l'eau à 20°C à raison d'au plus 10% en poids.

7. Formulation selon la revendication 6, le rapport pondéral de solvant non polaire à pesticide étant situé dans la plage de 1:10 à 8:1.

8. Formulation selon l'une quelconque des revendications 1 à 7, le rapport pondéral de noyau de capsule à paroi de capsule étant situé dans la plage de 50:1 à 1:1.

9. Formulation selon l'une quelconque des revendications 1 à 8, le pesticide se trouvant sous forme dissoute dans le noyau de capsule.

10. Formulation selon l'une quelconque des revendications 1 à 9, le pesticide étant soluble à 25°C à raison d'au moins 10 g/l dans un mélange d'hydrocarbures aromatiques présentant un début de plage d'ébullition d'au moins 225°C en formant une solution claire.

11. Formulation selon l'une quelconque des revendications 1 à 10 contenant 20 à 70% en poids de microcapsules, par rapport à la formulation agrochimique.

12. Formulation selon l'une quelconque des revendications 1 à 11, la teneur en pesticide qui est contenu dans le noyau de capsule contenant un pesticide étant de 10 à 600 g par litre de formulation agrochimique.

13. Procédé pour la préparation de microcapsules selon l'une quelconque des revendications 1 à 10, dans lequel on prépare une émulsion huile-dans-eau à partir de monomères, d'initiateur radicalaire, de colloïde de protection et du pesticide à encapsuler et on déclenche la polymérisation des monomères par chauffage et on la régule le cas échéant par une nouvelle augmentation de la température.

14. Procédé selon la revendication 13, dans lequel on déclenche, après la formation de la capsule, une post-polymérisation avec des sels de l'acide peroxodisulfurique comme initiateur radicalaire.

15. Utilisation de la formulation agrochimique selon l'une quelconque des revendications 1 à 12 pour lutter contre les champignons phytopathogènes et/ou une croissance non souhaitée de plantes et/ou une attaque non souhaitée par des insectes ou des acariens et/ou pour la régulation de la croissance de plantes, où on laisse agir les microcapsules sur les différents organismes nuisibles, leur espace de vie ou les plantes, le sol à protéger contre les différents organismes nuisibles et/ou sur les plantes non souhaitées et/ou sur les plantes utiles et/ou leur espace de vie.
